# EUROPÄISCHE PATENTSCHRIFT

(11) **EP 1 692 410 B1**
(45) Veröffentlichungstag und Bekanntmachung des Hinweises auf die Patenterteilung: **02.01.2008**
(21) Anmeldenummer: 04797814.3
(22) Anmeldetag: 11.11.2004
(51) Int. Cl.: F16D 7/02, F16D 1/08, F16D 3/06

(54) **SICHERHEITSKUPPLUNG, INSBESONDERE FÜR HAUPTANTRIEBSSTRÄNGE AN WALZGERÜSTEN**
SECURITY COUPLING IN PARTICULAR FOR MAIN DRIVETRAINS ON ROLLING STANDS
ACCOUPLEMENT DE SECURITE, EN PARTICULIER POUR LES TRANSMISSIONS PRINCIPALES DE CAGES DE LAMINOIR

(30) Priorität: 13.12.2003 DE 10358435
(43) Veröffentlichungstag der Anmeldung: 23.08.2006
(73) Patentinhaber: SMS Demag Aktiengesellschaft, 40237 Düsseldorf (DE)
(72) Erfinder: BERGER, Maik, 09111 chemnitz (DE); KLEIN, Achim, 57223 Kreuztal (DE); SOHLER, Jörn, 57223 kreuztal (DE); SAUPE, Michael, 57076 Siegen (DE)
(74) Vertreter: Klüppel, Walter
(86) Internationale Anmeldenummer: PCT/EP2004/012780
(87) Internationale Veröffentlichungsnummer: WO 2005/057038

(56) Entgegenhaltungen:
- DE-A1- 4 112 484
- DE-A1- 19 537 249
- DE-C1- 4 326 868

## Beschreibung

Die Erfindung betrifft eine Sicherheitskupplung gegen Überlast, insbesondere für Hauptantriebsstränge an Walzgerüsten, überbrückend einen mit Verzahnung ausgebildeten Spindelabschnitt und einen mit Festsitz ausgebildeten Spindelabschnitt. Eine derartige Sicherungskupplung ist z.B. aus DE-C-43 26 868 bekannt.

Bei modernen Grobblechgerüsten ist es heute oft üblich, eine Dreh-Sicherheitskupplung gegen Überlastung durch Momente motorseitig außerhalb der axialbeweglichen Antriebswellen anzuordnen.

Bei Gelenkwellen wird die Sicherheitsfunktion gegen axiale Überlast, z.B. durch Walzenschrägbruch in einem Verschiebestück erreicht. Hier dient das Verschiebestück auch zum Längenausgleich bei aktiver Verschiebung der Walzen.

Im Gegensatz zu Gelenkwellen weisen Flachzapfenspindeln in der Regel keine axiale Verschiebbarkeit auf. Bei Flachzapfenantrieben wird eine kleine axiale Verschiebung zwischen dem walzenseitigen Treffer und dem Gelenkkopf realisiert. Für eine größere axiale Verschiebung der Walzen oder als Schutzfunktion im Havarifall wird vereinzelt eine Verschiebung eines Gelenkkopfes auf einer Keilwelle angewandt.

Aus dem Dokument DE 38 11 790 A1 ist beispielsweise ein Walzwerksantrieb mit Bogenzahn-Gelenkspindel bekannt. Bei den zwischen Kammwalze und Arbeitswalzen angeordneten axial verschiebbaren Gelenkspindeln wird das Spindelgelenk jeweils aus einem eine Bogenverzahnung aufweisenden Kupplungstreffer und aus einer diesen Treffer umgreifende mit Innenverzahnung versehenen Kupplungshülse gebildet. Die Kupplungshülsen sind auf die Wellenzapfen von Kammwalze bzw. Arbeitswalze geschoben. Die Gelenkspindel ist zwischen den Kupplungshülsen mit Hilfe von im Bereich der Spindelachse angeordneten Stützelementen und axial verstellbaren Druckstößeln geführt. Zum Ausgleich der axialen Verschiebung der mit der Gelenkspindel gekoppelten Arbeitswalze übergreift die Innenverzahnung der Kupplungshülse die Bogenverzahnung des Treffers zumindest mit einer solchen tragenden Länge L, wie sie dem Maß der axialen Verschieblichkeit der Gelenkspindeln entspricht.

Das Dokument DE 37 06 577 C2 offenbart eine Zahngelenkspindel für Walzwerksantriebe mit auf den Enden der Spindelwelle vorgesehenen, Bogenverzahnungen aufweisenden Kupplungstreffern und diesen umgreifenden Innenverzahnungen der an der Spindelwelle beidendig über Stützkugeln und Druckstempel abgestützten Anschlusshülsen und mit einer Ölumlaufschmierung, zu der ein mit einer Nut vorgesehener Ölzufuhrring gehört. Der Ölzufuhrring umfasst abgedichtet die Spindelwelle und ist auf dieser, gegen axiale Verschiebung gesichert, drehbar gelagert, wobei die Nut durch mindestens eine radiale Bohrung in der Spindelwelle mit mindestens einem in dieser längsverlaufenden zentralen Kanal verbunden ist, von dem aus die zu schmierenden und kühlenden Zahnkupplungen mit Öl versorgbar sind. Die Bohrung des zentralen Kanals weist im walzenseitigen Endbereich der Spindelwelle einen vergrößerten Durchmesser zur Aufnahme von durch Tellerfedern vorgespannten Druckstößeln auf. Mindestens ein auf der Spindelwelle gelagertes Ölabfuhr-Gehäuse, umgibt abgedichtet die Zahnkupplung und den Ölzufuhrring. Die Spindelwelle ist in mindestens einem der Kupplungstreffer drehfest axial verschiebbar geführt und ist auf einer die Stützkugel aufweisenden axial vorgespannten Führungshülse axial verschiebbar geführt. Der zentrale Kanal ist mit Bohrungen sowie Ölleitungen zur Umlaufschmierung der Reibflächen zwischen dem gegen die Spindelwelle axial verschiebbaren Kupplungstreffer, der gegen die Spindelwelle axial verschiebbaren Führungshülse, den gegen die Druckstempel verlagerbaren Stützkugeln und den gegen die Innenverzahnungen verlagerbaren Bogenverzahnungen ausgestattet.

Das Dokument DE 40 28 158 A1 zeigt eine Kupplung zum Kuppeln von zwei zueinander koaxialen drehbaren Teilen, miteinander umfassend ein im wesentlichen zylindrisches Kupplungsteil, das zwischen den miteinander zu kuppelnden Teilen befestigbar ist und in radialer Richtung sowohl nach außen als auch nach innen ausdehnbar ist, um auf die Teile einen Kupplungsdruck über die Zwischenschaltung des Kupplungsteils auszuüben. Das Kupplungsteil enthält eine Druckkammer, die zur Speisung mit einem Druckströmungskanal zur Ausdehnung des Kupplungsteils bestimmt ist, und die mit einer Druckentlastungseinrichtung versehen ist, die bei einer Relativdrehung der vorstehend genannten Teile ausgelöst wird. Das Kupplungsteil ist so ausgebildet, dass es eine größere Kupplungskraft auf ein erstes der genannten Teile, als auf das andere dieser Teile ausübt, und die Druckentlastungseinrichtung ist so ausgebildet, dass sie bei einer Relativdrehung zwischen dem ersten Teil und dem Kupplungsteil aktiviert wird, jedoch eine Drehung zwischen dem anderen der Teile und dem Kupplungsteil ermöglicht.

Das Dokument DE 34 19 307 A1 offenbart eine Anordnung zur lösbaren Reibschlußverbindung zwischen einer als Hohlwelle ausgebildeten und in beabstandeten Lagern innerhalb eines Gehäuses gelagerten Getriebeeingangswelle und einer in diese einschiebbaren Antriebswelle. In der Getriebeeingangswelle ist eine vor den Lagern endende mit Flüssigkeit gefüllte Ringkammer von geringer radialer Weite ausgebildet. Wenigstens an einem Ende der Getriebeeingangswelle ist eine mit der Ringkammer in Verbindung stehende Einrichtung zum Ausüben von Druck auf die Flüssigkeit und dadurch zum Festklemmen der Getriebeeingangswelle auf der Antriebswelle vorgesehen.

Das Dokument EP 0 429 468 B1 offenbart eine drehmomentbegrenzende Kupplungsanordnung mit zwei zueinander koaxialen Kupplungselementen, die drehfest mit einer Antriebswelle bzw. einer angetriebenen Welle verbunden sind, und die miteinander in Eingriff stehen über zwei einander zugewandte, druckbeaufschlagte Flächen zum Bilden einer Reibverbindung. Die Reibverbindung ist derart bemessen, dass sie dann rutscht, wenn das Drehmoment, das auf die Kupplung einwirkt, einen vorgegebenen Wert überschreitet. Es ist eine Vorrichtung zum Erfassen des auftretenden Rutschens in der Reibverbindung und zum Lösen der Kupplung beim Auftreten des Rutschens vorgesehen. Die Reibverbindung weist ein zylindrisches Teil auf, das mit einem Kupplungselement starr verbunden ist und im Presssitz eine zylindrische Buchse trägt, und das mit dem anderen Kupplungselement starr verbunden ist. Die Kupplungsanordnung weist weiterhin eine Hochdruckpumpe auf, welche durch die Detektorvorrichtung angetrieben ist, derart, dass sie unter Druck stehendes Medium einem Auslasskanal dann zufördert, wenn ein Rutschen in der Reibverbindung auftritt. Eine Mehrzahl von Öffnungen ist wenigstens einer der Reibflächen angeformt und kommuniziert mit dem Auslasskanal der Pumpe. Die Öffnungen sind derart gestaltet, dass sie eine hydrostatische Schicht gemeinsam mit den Reibflächen bei Zufuhr von Druckmedium bilden.

Das Dokument DE 101 12 088 A1 betrifft ein Verfahren zum Druckaufbau in Verbindungskupplungen zur kraftschlüssigen Verbindung zweier koaxialer, miteinander spielfrei zu koppelnder Maschinenelemente - einem ersten antriebsseitigen und einen zweiten abtriebsseitigen Maschinenelement - mit einem von wenigstens einer teilweise elastisch verformbaren Wand begrenzten Zwischenraum, der mit einem Druckmittel befüllbar ist. Das Druckmittel wird während der Rotation der Verbindungskupplung mittels wenigstens einer im Bereich des Außenumfanges der Verbindungskupplung angeordneten Fördereinrichtung aus einem mitrotierenden Druckmitteltank in den Zwischenraum gefördert, wobei der Antrieb von einem Exzenter gebildet wird, der direkt oder indirekt über weitere Übertragungsmittel an der Fördereinrichtung wirksam wird.

Ausgehend vom vorgenannten Stand der Technik liegt der Erfindung die Aufgabe zugrunde, insbesondere für Flachzapfenantriebe mit zwei Lagern zur Spindelbalancierung eine Lösung zu finden , mit der es gelingt, eine kombinierte Dreh-/Schiebesicherung vorzugsweise in vorhandene Antriebe zu integrieren.

Zur Lösung dieser Aufgabe wird bei einer Sicherheitskupplung gegen Überlast, insbesondere für Hauptantriebsstränge an Walzgerüsten, die einen mit Verzahnung ausgebildeten Spindelabschnitt und einen mit Festsitz ausgebildeten Spindelabschnitt überbrückt, eine Drehschiebehülse vorgeschlagen, die einenendes den Spindelabschnitt mit Innenverzahnung axial verschiebbar aufnimmt, und anderenendes den Spindelabschnitt mit einer Innenhülse im Festsitz umgreift, und mit ihrem rückwärtigen hülsenförmigen Fortsatz mittels einer Druckhülse und eines mit Druckflüssigkeit aufgespannten Druckspaltes eine drehfeste Reibschlussverbindung herstellt, die im Überlastfall nachgibt. Mit diesen Maßnahmen ist es gelungen, den Schutzmechanismus für axiale Überlast mit einer Drehsicherung für Überlast durch Torsion zu kombinieren.

In Ausgestaltung der Sicherheitskupplung ist vorgesehen, dass zur Aufnahme der axialen Kupplungskräfte vorzugsweise außen liegende Axialdruckzylinder als Abstandhalter zwischen den Spindelabschnitten angeordnet sind, die bei Überlast nachgiebig ausgebildet sind.

Weitere Ausgestaltungen der Erfindung sind entsprechend den Unteransprüchen vorgesehen.

Dabei kann die Maßnahme vorgesehen sein, dass der eine Spindelabschnitt mit einer Festlagerstelle und der andere Spindelabschnitt mit einer Loslagerstelle ausgebildet ist.

Weiterhin kann vorgesehen sein, dass bei axialer Überbelastung an dem Spindelabschnitt in Richtung der Festlagerseite dieser mit der Loslagerstelle, der Drehsicherung und der innenverzahnten Drehschiebehülse über den außen verzahnten Teil dieses Spindelabschnitts schiebbar ist.

Mit Vorteil kann weiterhin die Auslösekraft der axialen Verschiebung durch den Druck in den Zylindern einstellbar sein. Mit Vorteil können weiterhin die Zylinder zur Regelung bzw. Dämpfung der Kupplungswirkung ausgebildet sein.

Eine zweckmäßige Ausgestaltung sieht vor, dass bei Drehmomentüberlast der Spindelabschnitt mit der fest verbundenen Hülse gegenüber der Drehschiebehülse und der Druckhülse rutschbar ausgebildet und ein fest mit dem Abschnitt verbundener Abscherring mit einem Abscherventil in Verbindung steht, wodurch die über das Druckmedium im Druckspalt vorgespannte Verbindung gelöst ist. Nach dem Auslösen erfolgt eine Rotation über die Lager, nachdem ein Auslösemoment über den Druck an der Druckhülse eingestellt ist.

Weitere Einzelheiten, Merkmale und Vorteile der Erfindung ergeben sich aus den nachstehenden Erläuterung eines in der Zeichnung schematisch dargestellten Ausführungsbeispieles.

Es zeigt:

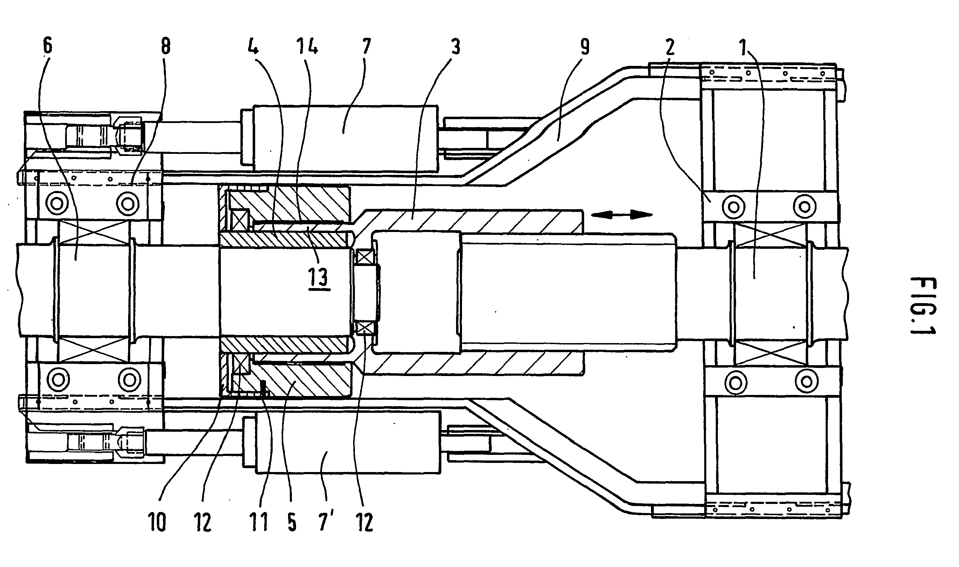

- Figur 1: eine kombinierte Dreh-/Schiebe-Sicherheitskupplung, insbesondere für Hauptantriebsstränge an Walzgerüsten, die einen mit Verzahnung ausgebildeten Spindelabschnitt und einen mit Festsitz ausgebildeten Spindelabschnitt überbrückt.

Die erfindungsgemäße Sicherheitskupplung ist mit einer Drehschiebehülse 3 ausgebildet, die einenendes den Spindelabschnitt 1 mit Innenverzahnung axial verschiebbar aufnimmt, und anderenendes den Spindelabschnitt 6 mit einer Innenhülse 4 im Festsitz umgreift, die ihrerseits unter Einschub eines rückwärtigen hülsenförmigen Fortsatzes 13 der Drehschiebehülse 3 mit einer Druckhülse 5 unter Einfügung eines mit Druckflüssigkeit aufgespannten Druckspaltes 14 mit diesem Fortsatz 13 eine drehfeste Reibschlussverbindung herstellt, die im Überlastfall nachgibt, und wobei zur Aufnahme der axialen Kupplungskräfte vorzugsweise außen liegende Axialdruckzylinder 7, 7' als Abstandhalter zwischen den Spindelabschnitten 1 und 6 vorgesehen sind, die bei Überlast nachgiebig ausgebildet sind.

Der Spindelabschnitt 1 ist mit einer Festlagerstelle 2, und der Spindelabschnitt 6 mit einer Loslagerstelle 8 ausgebildet. Bei axialer Überbelastung an dem Spindelabschnitt 6 in Richtung der Festlagerseite 2 ist dieser Spindelabschnitt 6 mit der Loslagerstelle 8, der Drehsicherung 4, 5, und der innenverzahnten Drehschiebehülse 3 über den außen verzahnten Teil des Spindelabschnittes 1 schiebbar. Die Auslösekraft der axialen Verschiebung ist durch den Druck in den Zylindern 7, 7' einstellbar. Dabei können die Zylinder 7, 7' zur Regelung bzw. Dämpfung der Kupplungswirkung genutzt werden.

Bei Drehmomentüberlast rutscht der Spindelabschnitt 6 mit der fest verbundenen Hülse 4 gegenüber der Drehschiebehülse 3 und der Druckhülse 5, wobei ein fest mit dem Abschnitt 6 verbundener Abscherring 10 den Kopf des Abscherventils 11 abtrennt, wodurch die über das Druckmedium im Druckspalt 14 vorgespannte Verbindung gelöst und eine Rotation nach dem Auslösen über die Lager 12 erfolgt, nachdem ein Auslösemoment über den Druck in der Druckhülse eingestellt ist.

Die Funktion der erfindungsgemäßen Sicherheitskupplung kann wie folgt beschrieben werden:

Der Spindelabschnitt 1 mit der Außenverzahnung ist durch die Festlagerstelle 2 axial und radial gelagert. Er überträgt das erforderliche Walzmoment formschlüssig über die Drehschiebehülse 3. Zwischen dem unverzahnten Ende der Drehschiebehülse und der Druckhülse 5 der Drehsicherungseinheit besteht Reibschluss. Dieser wird durch ein Druckmedium, welches sich in einem Spalt der Druckhülse 5 befindet, aufrechterhalten. Die Innenhülse 4 ist mit dem Spindelabschnitt 6 fest verbunden. Die axiale Beweglichkeit der Verzahnung zwischen Spindelabschnitt 1 und der Drehschiebehülse 3 wird durch mindestens einen Zylinder 7, 7' eingeschränkt.

Um beispielsweise bei einem Walzenschrägbruch die Spindelausbalancierung, die Bolzen der motorseitigen Gelenke, die Axiallager der Zwischenwelle bzw. des Untermotors und evtl. indirekt betroffene Bauteile vor Beschädigung und die Motoren vor axialer Verschiebung zu schützen, wird bei axialer Überbelastung an dem Spindelabschnitt 6 in Richtung der Festlagerseite dieser Spindelabschnitt mit der Loslagerstelle 8, der Drehsicherung 4, 5, 10, 11, 12 und der innenverzahnten Drehschiebehülse 3 über einen außenverzahnten Teil des Spindelabschnittes 1 geschoben. Der Schiebeweg ist durch den festzulegenden Abstand der beiden zueinander zugewandten Spindelstirnseiten begrenzt. Die Auslösekraft der axialen Verschiebung wird durch den Druck in den Zylindern 7, 7' eingestellt. Bei Überschreitung eines maximalen Drucks, kollabieren die Zylinder und geben den Veschiebeweg frei. Die Zylinder 7, 7' bieten ebenfalls die Möglichkeit einer aktiven Regelung bzw. Dämpfung. Die Verschiebung der Loslagerstelle 8 geschieht auf den Lamellen 9.

Bei einer Momentüberlastung rutscht der Spindelabschnitt 6 mit der fest verbundenen Hülse 4 gegenüber der Drehschiebehülse 3 und der Druckhülse 5. Der fest mit dem Spindelabschnitt 6 verbundene Abscherring 10 trennt dabei den Kopf des Abscherventiles 11 ab, so dass die über ein Druckmedium vorgespannte Verbindung gelöst wird. Die Rotation erfolgt nach dem Auslösen über die Lager 12. Das Auslösemoment wird über den Druck in der Druckhülse eingestellt.

## Patentansprüche

1. Sicherheitskupplung gegen Überlast, insbesondere für Hauptantriebsstränge an Walzgerüsten, überbrückend einen mit Verzahnung ausgebildeten Spindelabschnitt (1) und einen mit Festsitz ausgebildeten Spindelabschnitt 6,
**gekennzeichnet durch,**
eine Drehschiebehülse (3), die einenendes den Spindelabschnitt (1) mit Innenverzahnung axial verschiebbar aufnimmt, und anderenendes den Spindelabschnitt (6) mit einer Innenhülse (4) im Festsitz umgreift, und mit ihrem rückwärtigen hülsenförmigen Fortsatz (13) mittels einer Druckhülse (5) und eines mit Druckflüssigkeit aufgespannten Druckspaltes (14) eine drehfeste im Überlastfall nachgebende Reibschlussverbindung herstellt.

2. Sicherheitskupplung nach Anspruch 1,
**dadurch gekennzeichnet,**
**dass** zur Aufnahme der axialen Kupplungskräfte vorzugsweise außenliegende Axialdruckzylinder (7, 7') als Abstandhalter zwischen den Spindelabschnitten (1, 6) vorgesehen sind.

3. Sicherheitskupplung nach Anspruch 1, oder 2,
**dadurch gekennzeichnet,**
**dass** der Spindelabschnitt (1) mit einer Festlagerstelle (2), und der Spindelabschnitt (6) mit einer Loslagerstelle (8) ausgebildet ist.

4. Sicherheitskupplung nach Anspruch 1, 2, oder 3,
**dadurch gekennzeichnet,**
**dass** bei axialer Überbelastung an dem Spindelabschnitt 6 in Richtung der Festlagerseite (2) dieser Spindelabschnitt (6) mit der Loslagerstelle 8, der Drehsicherung (4, 5, 10, 11, 12) und der innenverzahnten Drehschiebehülse (3) über den aussenverzahnten Teil des Spindelabschnitts 1 schiebbar ist.

5. Sicherheitskupplung nach einem oder mehreren der Ansprüche 1 bis 4,
**dadurch gekennzeichnet,**
**dass** die Auslösekraft der axialen Verschiebung durch den Druck in den Zylindern (7, 7') einstellbar ist.

6. Sicherheitskupplung nach einem oder mehreren der Ansprüche 1 bis 5,
**dadurch gekennzeichnet,**
**dass** die Zylinder (7, 7') zur Regelung bzw. Dämpfung der Kupplungswirkung ausgebildet sind.

7. Sicherheitskupplung nach einem oder mehreren der Ansprüche 1 bis 6,
**dadurch gekennzeichnet,**
**dass** bei Drehmomentüberlast der Spindelabschnitt (6) mit der fest verbundenen Hülse (4) gegenüber der Drehschiebehülse (3) und Druckhülse (5) rutschbar ausgebildet ist, und ein fest mit dem Abschnitt (6) verbundener Abscherring (10) mit einem Abscherventil (11) in Verbindung steht, wodurch die über das Druckmedium im Druckspalt (14) vorgespannte Verbindung gelöst ist.

8. Sicherheitskupplung nach einem oder mehreren der Ansprüche 1 bis 7,
**dadurch gekennzeichnet,**
**dass** die Druckhülse (5) über ein Lager (12) auf der Innenhülse (4) drehbar abgestützt ist.

9. Sicherheitskupplung nach einem oder mehreren der Ansprüche 1 bis 8,
**dadurch gekennzeichnet,**
**dass** über den Druck an der Druckhülse (5) ein vorgegebenes Anlösemoment einstellbar ist.

## Claims

1. Safety coupling against overload, particularly for main drive trains at roll stands, bridging over a spindle section (1), which is constructed with a toothing, and a spindle section (6), which is constructed with a fixed seat, **characterised by** a rotary slide sleeve (3), which at one end receives the spindle section (1) with internal toothing to be axially displaceable and at the other end engages around the spindle section (6) by an inner sleeve (4) in the fixed seat, and produces by its rearward sleeve-shaped projection (13) by means of a pressure sleeve (5) and a pressure gap (14), which is bridged by a pressure liquid, a rotationally fast friction-locking connection yielding in the case of overload.

2. Safety coupling according to claim 1, **characterised in that** for acceptance of the axial coupling forces preferably externally disposed axial pressure cylinders (7, 7') are provided as spacers between the spindle sections (1, 6).

3. Safety coupling according to claim 1 or 2, **characterised in that** the spindle section (1) is constructed with a fixed bearing point (2) and the spindle section (6) with a movable bearing point (8).

4. Safety coupling according to claim 1, 2 or 3, **characterised in that** in the case of axial overload at the spindle section (6) in the direction of the fixed bearing side (2) this spindle section (6) together with the movable bearing point (8) the rotational securing (4, 5, 10, 11, 12) and the internally toothed rotary slide sleeve (3) are displaceable over the externally toothed part of the spindle section (1).

5. Safety coupling according to one or more of claims 1 to 4, **characterised in that** the trigger force of the axial displacement is settable by the pressure in the cylinders (7, 7').

6. Safety coupling according to one or more of claims 1 to 5, **characterised in that** the cylinders (7, 7') are constructed for regulating or damping the coupling action.

7. Safety coupling according to one or more of claims 1 to 6, **characterised in that** in the case of torque overload the spindle section (6) together with the fixedly connected sleeve (4) is constructed to be able to slip relative to the rotary slide sleeve (3) and the pressure sleeve (5) and a shear ring (10) fixedly connected with the section (6) is connected with a shear valve (11), whereby the connection prestressed by way of the pressure medium in the pressure gap (14) is released.

8. Safety coupling according to one or more of claims 1 to 7, **characterised in that** the pressure sleeve (5) is rotatably supported on the inner sleeve (4) by way of a bearing (12).

9. Safety coupling according to one or more of claims 1 to 8, **characterised in that** a predetermined release moment is settable by way of the pressure at the pressure sleeve (5).

## Revendications

1. Accouplement de sécurité anti-surcharge, en particulier pour les trains d'entraînements principaux de cages de laminoir, qui effectue un pontage d'un tronçon de broche (1) réalisé avec une denture et d'un tronçon de broche (6) réalisé avec une assise fixe,
**caractérisé par** une douille en translation/rotation (3) qui reçoit à une extrémité le tronçon de broche (1) avec denture intérieure avec possibilité de translation axiale, et qui entoure à l'autre extrémité le tronçon de broche (6) avec douille intérieure (4) avec une assise fixe, et qui établit, avec son prolongement postérieur en forme de douille (13) au moyen d'une douille de compression (5) et d'une fente de compression (14) couverte d'un liquide sous pression, une liaison à coopération solidaire en rotation à coopération de friction qui cède en cas de surcharge.

2. Accouplement de sécurité selon la revendication 1,
**caractérisé en ce que**, pour encaisser les forces d'accouplement axiales, il est prévu des cylindres de pressions axiaux (7, 7'), de préférence situés à l'extérieur, à titre d'écarteurs entre les tronçons de broche (1, 6).

3. Accouplement de sécurité selon la revendication 1 ou 2,
**caractérisé en ce que** le tronçon de broche (1) est réalisé avec une portion de palier fixe (2), et le tronçon de broche (6) est réalisé avec une portion de palier fou (8).

4. Accouplement de sécurité selon la revendication 1, 2 ou 3,
**caractérisé en ce que**, en cas de surcharge axiale au niveau du tronçon de broche (6) en direction de la portion de palier fixe (2), ce tronçon de broche (6) avec la portion de palier fou (8), le blocage antirotation (4, 5, 10, 11, 12) et la douille en rotation/translation (3) à denture intérieure, est capable de translation par-dessus la partie à denture extérieure du tronçon de broche (1).

5. Accouplement de sécurité selon l'une ou plusieurs des revendications 1 à 4,
**caractérisé en ce que** la force de déclenchement de la translation axiale est réglable au moyen de la pression dans les cylindres (7, 7').

6. Accouplement de sécurité selon l'une ou plusieurs des revendications 1 à 5,
**caractérisé en ce que** les cylindres (7, 7') sont réalisés en vue de la régulation ou respectivement de l'amortissement de l'effet d'accouplement.

7. Accouplement de sécurité selon l'une ou plusieurs des revendications 1 à 6,
**caractérisé en ce que**, en cas de surcharge du couple de rotation, le tronçon de broche (6) avec la douille (4) fermement reliée, est réalisé de manière à pouvoir riper par rapport à la douille (3) en translation/rotation et la douille de compression (5), et il est prévu une bague de cisaillement (10), avec une soupape de cisaillement (11), fermement reliée avec le tronçon (6), grâce à quoi la liaison précontrainte par le fluide sous pression dans la fente à pression (14) est annulée.

8. Accouplement de sécurité selon l'une ou plusieurs des revendications 1 à 7,
**caractérisé en ce que** la douille de compression (5) est soutenue en rotation sur la douille intérieure (4) au moyen d'un palier (12).

9. Accouplement de sécurité selon l'une ou plusieurs des revendications 1 à 8,
**caractérisé en ce que**, un couple de déclenchement prédéterminé est susceptible d'être réglé au moyen de la pression au niveau de la douille de compression (5).
